# EUROPÄISCHE PATENTSCHRIFT

(11) **EP 1 275 291 B1**
(45) Veröffentlichungstag und Bekanntmachung des Hinweises auf die Patenterteilung: **16.12.2009**
(21) Anmeldenummer: 02015487.8
(22) Anmeldetag: 12.07.2002
(51) Int. Cl.: A01D 43/08, A01F 29/12

(54) **Erntemaschine**
Forage harvester
Faucheuse-hacheuse

(30) Priorität: 12.07.2001 DE 10133886
(43) Veröffentlichungstag der Anmeldung: 15.01.2003
(73) Patentinhaber: Maschinenfabrik Bernard Krone GmbH, 48480 Spelle (DE)
(72) Erfinder: Krone, Bernard, Dr.-Ing. E. h., 48480 Spelle (DE); Strobel, Thomas, Dipl.-Ing., 01833 Stolpen, OT Langenwolmsdorf (DE); Radke, Karl-Heinz, Dipl.-Ing., 02681 Wilthen (DE)
(74) Vertreter: Pott, Ulrich

(56) Entgegenhaltungen:
- EP-A- 0 119 307
- DE-U- 29 622 917
- GB-A- 2 012 540
- US-A- 2 857 946
- US-A- 4 592 514

## Beschreibung

Die Erfindung bezieht sich auf eine Erntemaschine, insbesondere einen selbstfahrenden Feldhäcksler zum Aufnehmen und Häckseln von Mais, Anwelkgras, Grünfutter und dergleichen Emtegut mit einem einer Emtegutaufnahme in Förderrichtung des Erntegutes nachgeordneten Häckseleinrichtung und mit einem zwischen der Häckseleinrichtung und einer Erntegutauswurfvorrichtung vorgesehenen, einem in einem Fördergehäuse angeordneten, Förderelemente tragenden sowie in Rotationsbewegung versetzbaren Förderer.

Eine Erntemaschine der vorgenannten Art ist aus der EP 0 510 470 B1 bekannt. Bei dieser Erntemaschine weist der Förderer scheibenförmig ausgebildete Förderelemente auf, die ihrerseits Durchbrechungen haben. In Seitenbereichen des Fördergehäuses ist zumindest eine Öffnung vorgesehen, wodurch ein Rückstromdruck eingangsseitig des Fördergehäuses vermieden werden soll. Durch das Vorsehen einer Abrißkante an dem die Fördertrommel umgebenden Gehäusebereich soll eine strömungstechnisch günstige Trennung des mit dem Förderer zirkulierenden Luftstromes erfolgen. Dadurch sollen Turbolenzen vermieden und eine möglichst reibungsfreie Gutförderung gewährleistet sein.

Dazu müssen jedoch die Förderelemente gehäusespezifisch ausgeführt werden, um das Erntegut vom Eingabebereich des Fördergehäuses bis hin zum Abgabebereich des Erntegutfördergehäuses zu fördern. Damit ist die Förderleistung des Förderers begrenzt, so daß sich der Förderer nicht für sonstige Aufgaben nutzen läßt, um z. B. verschmutzte Kühleransaugflächen der Erntemaschine durch Absaugung zu reinigen. Die scheibenförmige Ausbildung der Förderelemente hat darüber hinaus den Nachteil, daß sich Erntegutteile im Inneren des Förderers ansammeln können mit der Gefahr, daß eine nicht vorhersehbare Förderung dieses Erntegutes erfolgt.

Das Dokument DE-U-296 22 917 offenbart eine Erntemaschine der eingangs genannten Art, wobei sich eine über die Breite des dort vorgesehenen Rotors erstrekkende Zuluftklappe bei Verarbeitung von schwerem Emtegut vollständig geschlossen werden kann. Damit läßt sich jedoch in allen Betriebszuständen das Erntegut jedoch nicht sicher bis hin zur Erntegutauswurfvorrichtung fördern.

Das Dokument US-A-2,857,946 offenbart eine Erntemaschine mit einem Häckselrotor, der als geschlossener Hohlkörper mit Förderelementen und Schneidelementen ausgebildet ist. Dabei erstrecken sich die Förderelemente entlang des Hohlkörpers bis hin zu dessen den Luftschacht begrenzenden Hohlkörperstirnflächen. Die Luftschächte dienen insbesondere dazu, einen Rückstrom des gehäckselten Gutes zu verhindern. Durch die zusätzlichen Luftschächte läßt sich jedoch das Förderverhalten nicht wesentlich positiv beeinflussen.

Es ist Aufgabe der vorliegenden Erfindung, eine Erntemaschine der eingangs genannten Art zu schaffen, mit der das Emtegut sicher in allen Betriebszuständen von der Häckseleinrichtung bis hin zur Erntegutauswurfvorrichtung zu fördern ist.

Zur Lösung dieser Aufgabe zeichnet sich die Erntemaschine der eingangs genannten Art dadurch aus, daß der Förderer als eine einen geschlossenen Hohlkörper aufweisende Fördertrommel ausgebildet ist, die in einem Fördergehäuse angeordnet ist, das die Stirnseiten der Fördertrommel unter Ausbildung von stirnseitigen Luftschächten mit Abstand umgrenzt, daß einzelne Förderelemente zumindest bereichsweise in den Luftschächten angeordnet sind, und daß auf dem Mantel der Fördertrommel Paddel als Förderelemente vorgesehen sind, wobei einzelne Paddel bereichsweise in die Luftschächte hineinragen.

Damit ist eine Erntemaschine zur Verfügung gestellt, mit der sich das Erntegut sicher in allen Betriebszuständen von der Häckseleinrichtung bis hin zu der Erntegutauswurfvorrichtung fördern läßt. Durch die zusätzlichen stirnseitigen Luftschächte, in die Förderelemente hineinragen bzw. in denen Förderelemente angeordnet sein können, wird eine erhöhte Saugleistung zur Verfügung gestellt. Die Fördertrommel ist eine relativ großvolumige geschlossene Trommel, so daß hinreichende Stirnflächen zur Verfügung stehen, um dort auch direkt Förderelemente z. B. in Gestalt von Luftschaufeln anordnen zu können. Diese können hinsichtlich Größe und Form den benötigten Saugleistungen angepaßt sein.

Auf dem Mantel der Fördertrommel sind leistenförmige Einzelpaddel als Förderelemente vorgesehen. Diese sind vorzugsweise versetzt zueinander und mit Abstand voneinander auf dem Mantel der Fördertrommel angeordnet. Einzelne Paddel ragen bereichsweise in die Luftschächte hinein, wodurch sich das Förderverhalten weiter günstig beeinflussen läßt.

Bevorzugterweise sind zusätzlich an den Stirnflächen der Fördertrommel Luftförderelemente angeordnet, die während der Rotationsbewegung der Fördertrommel in den Luftschächten rotieren, so daß zusätzliche Luft über diese Luftschaufeln anzusaugen ist, die zur Unterstützung der Förderung des Gutstromes genutzt werden kann. Dadurch ist eine erhöhte Förderleistung zur Verfügung gestellt.

Desweiteren ist aufgrund dieser erhöhten Saug- und Förderleistung die Möglichkeit geschaffen, z. B. über zusätzliche Anschlüsse Leitungen an die Luftschächte und damit an die Fördertrommel anzuschließen, um z. B. Kühler- oder sonstige Aggregate von Verschmutzungen zu reinigen. Damit ist eine weitere zusätzliche Nutzung des Förderers ermöglicht.

Hinsichtlich weiterer wesentlicher Ausgestaltungen der Erfindung wird auf die Unteransprüche, die nachfolgende Beschreibung und die Zeichnung verwiesen.

In der Zeichnung zeigen:
Fig. 1 eine Seitenansicht eines Ausführungsbeispieles eines selbstfahrenden Feldhäcklsers;
Fig. 2 in perspektivischer Darstellung ein Ausführungsbeispiel einer Fördertrommel der Erntemaschine nach der Erfindung;
Fig. 3 eine Seitenansicht auf die Stirnseite des Ausführungsbeispiels nach Fig. 2; in einer Darstellung ohne Gehäuseseitenwandungen;
Fig. 4 eine Frontansicht auf das Fördergehäuse sowie die Fördertrommel gemäß dem Ausführungsbeispiel nach Fig. 2, und 3, wobei das Gehäuse nur teilweise dargestellt ist, und

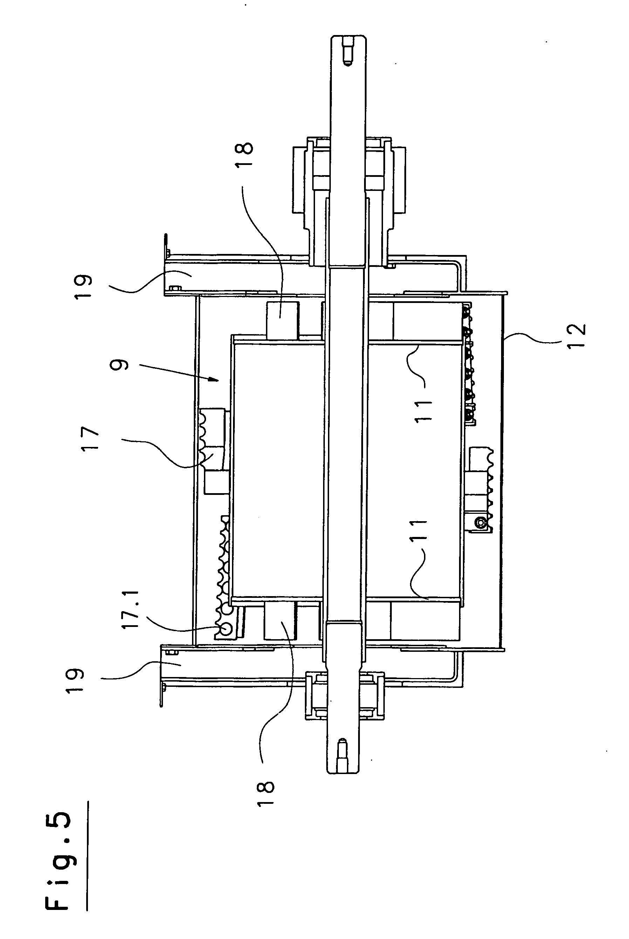

Fig. 5 eine zur Fig. 4 analoge, jedoch geschnittene Darstellung der Fördertrommel sowie des Fördergehäuses.

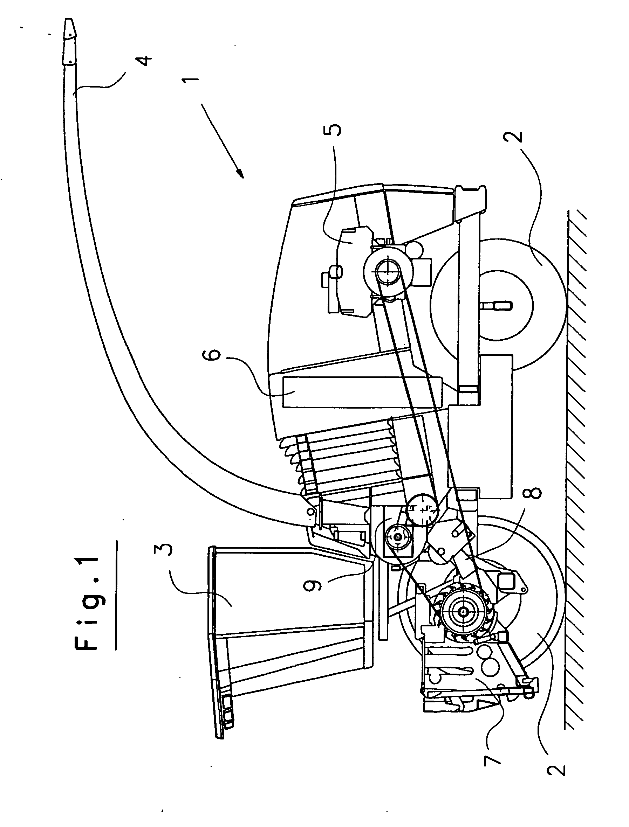

In der Zeichnung sind grundsätzlich gleichwirkende Teile mit übereinstimmenden Bezugziffern versehen. Der in Fig. 1 ganz allgemein dargestellte selbstfahrende Feldhäcksler 1 hat Räder 2, eine Kabine 3, eine Erntegutauswurfvorrichtung 4 und einen Antriebsmotor 5, eine zentrale Kühleinheit 6, eine Häckseinrichtung 7, einen Übergabekanal 8 für das Erntegut sowie eine zwischen der Erntegutauswurfvorrichtung 4 sowie der Häckseleinrichtung 7 angeordneten Förderer 9.

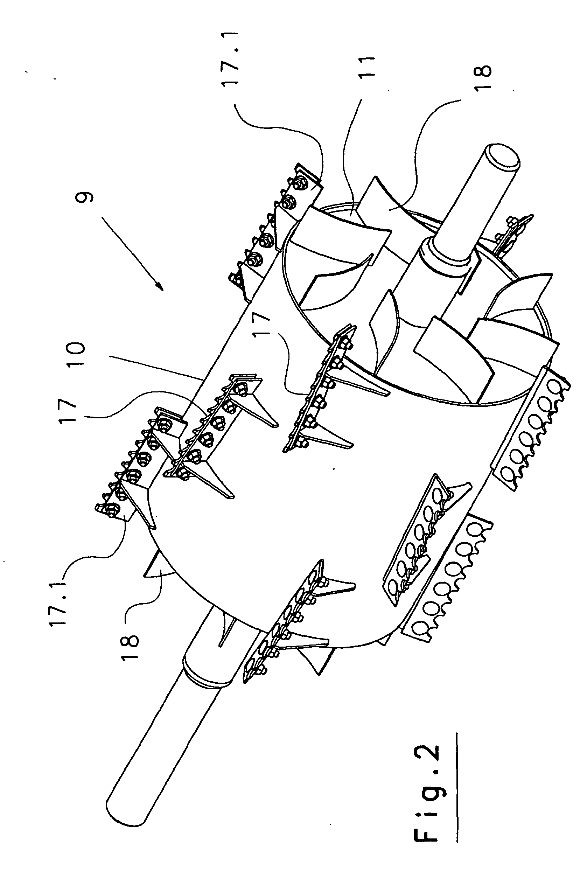

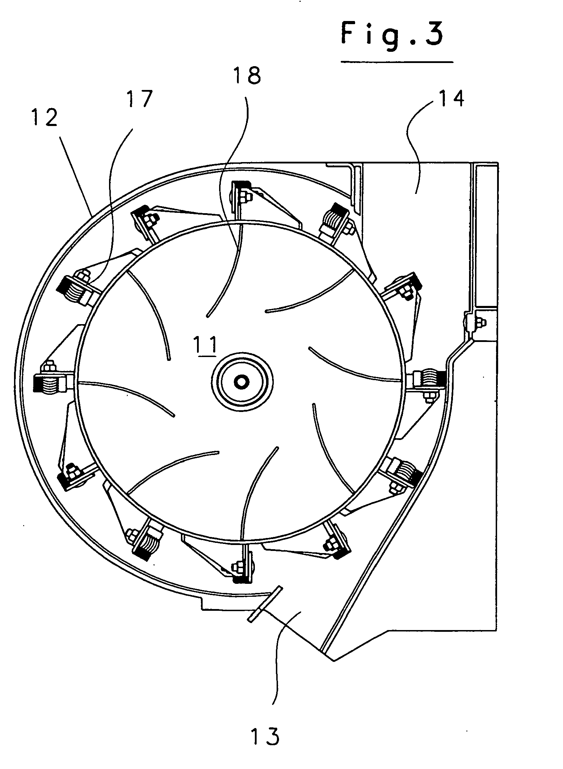

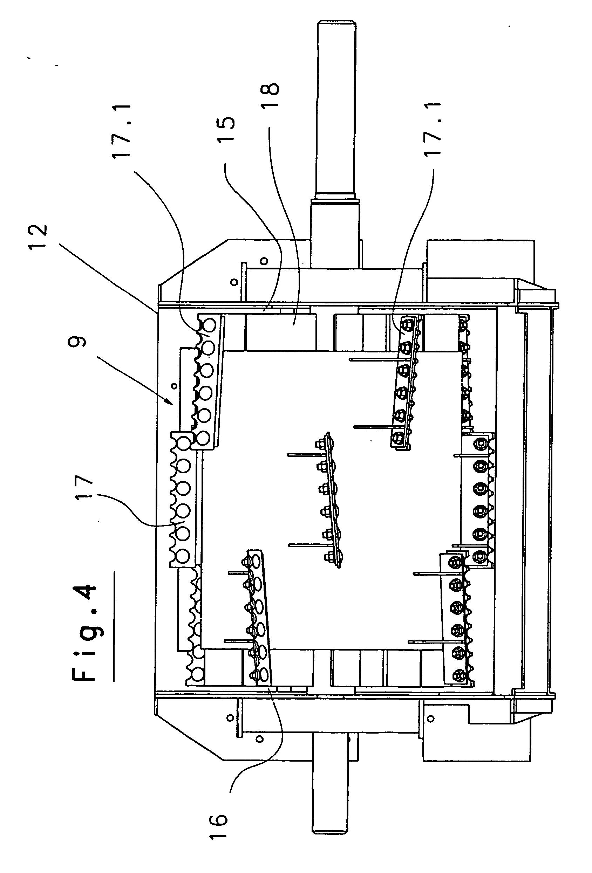

Wie aus den Figuren 2 bis 4 näher hervorgeht ist der Förderer 9 als relativ großvolumige Fördertrommel mit einem Trommelmantel 10 sowie Stirnflächen 11 ausgebildet. Der Förderer 9 ist insgesamt in einem Fördergehäuse 12 angeordnet (Figuren 3 und 4) mit einem Eingabebereich 13 und einem Gutabgabebereich 14, das den Förderer einerseits radial umgrenzt, darüber hinaus jedoch den Förderer 9 stirnseitig derart umgrenzt, daß Luftschächte 15 und 16 innerhalb des Gehäuses 12 beiderseits der jeweiligen Stirnseiten 11 vorgesehen sind.

Auf der Mantelfläche 10 des Förderers 9 sind mit Abstand zueinander Paddel 17 als Förderelemente vorgesehen. Die stirnseitigen Paddel 17 haben Endbereiche 17.1, die in die Luftschächte hineinragen. An den Stirnflächen 11 des Förderers 9 sind jeweils Luftförderelemente in Gestalt von Luftschaufeln 18 vorgesehen, die mithin während der Rotation des Förderers 9 in den jeweiligen Luftschächten über Luftansaugkanäle 19 Luft ansaugen und für eine erhöhte Förderleistung mit Sorge tragen. Desweiteren wird aufgenommenes Erntegut in die Bereiche der Luftschächte 15, 16 hineingesaugt und mit Hilfe der Paddel 17 und der Luftschaufeln 18 weitergefördert. An die Luftansaugkanäle 19 lassen sich auch über im einzelnen nicht näher gezeigte Anschlußverbindungen weitere Aggregate anschließen, wie beispielsweise zentrale Kühlereinheiten und dergleichen, um diese von Verschmutzungen zu reinigen.

Durch die Luftschächte 15, 16 kann die Förderleistung den maschinenseitigen Anforderungen durch Auswahl von Anzahl und Geometrie optimal der Paddel und Luftschaufeln angepaßt werden, wobei durch die optimierte Gestaltung der stirnseitigen Luftförderelemente Luft mit einem erhöhten Wirkungsgrad, in größerer Menge und mit einem höherem Unterdruck gefördert werden kann. Eine weitere Verbesserung im Bereich des Ernteguteingabebereiches ist dadurch zu erreichen, daß sich der Guteingabebereich in Förderrichtung des Erntegutes zum Förderer 9 hin verjüngt.

## Patentansprüche

1. Erntemaschine, insbesondere selbstfahrender Feldhäcksler (1) zum Aufnehmen und Häckseln von Mais, Anwelkgras, Grünfutter und dergleichen Erntegut mit einem einer Emtegutaufnahme in Förderrichtung des Erntegutes nachgeordneten Häckseleinrichtung (7) und mit einem zwischen der Häckseleinrichtung (7) und einer Erntegutauswurfvorrichtung (4) vorgesehenen, in einem Fördergehäuse (12) angeordneten, Förderelemente tragenden sowie in Rotationsbewegung versetzbaren Förderer (9), **dadurch gekennzeichnet, daß** der Förderer (9) als eine einen geschlossenen Hohlkörper aufweisende Fördertrommel ausgebildet ist, die in einem Fördergehäuse (12) angeordnet ist, das die Stirnseiten (11) der Fördertrommel unter Ausbildung von stirnseitigen Luftschächten (15, 16) mit Abstand umgrenzt, daß einzelne Förderelemente (17, 18) zumindest bereichsweise in den Luftschächten (15, 16) angeordnet sind, und daß auf dem Mantel (10) der Fördertrommel Paddel (17) als Förderelemente vorgesehen sind, wobei einzelne Paddel (17) bereichsweise in die Luftschächte (15, 16) hineinragen.

2. Erntemaschine nach Anspruch 1, **dadurch gekennzeichnet., daß** einzelne Paddel (17) versetzt zueinander auf dem Mantel (10) der Fördertrommel angeordnet sind.

3. Erntemaschine nach Anspruch 2, **dadurch gekennzeichnet, daß** Paddel (17) in Reihe auf dem Mantel (10) der Fördertrommel vorgesehen sind, wobei Enden (17.1) einer Paddelreihe in die Luftschächte (15, 16) hineinragen.

4. Erntemaschine nach einem der Ansprüche 1 bis 3, **dadurch gekennzeichnet, daß** an den Stirnflächen (11) der Fördertrommel Luftförderelemente (18) angeordnet sind.

5. Erntemaschine nach Anspruch 4, **dadurch gekennzeichnet, daß** die Luftförderelemente (18) schmaler als die in die Luftschächte (15, 16) ragenden Bereiche (17.1) von Paddeln (17) ausgebildet und im inneren Rotationskreis der Paddel (17) angeordnet sind.

6. Erntemaschine nach Anspruch 4 oder 5, **dadurch gekennzeichnet, daß** die Luftförderelemente (18) als Luftschaufeln ausgebildet sind.

7. Erntemaschine nach einem der Ansprüche 1 bis 6, **dadurch gekennzeichnet, daß** den stirnseitigen Luftschächten (15, 16) jeweils ein gehäuseseitiger Lufteintrittskanal (19) zugeordnet ist.

8. Erntemaschine nach einem der Ansprüche 1 bis 7, **dadurch gekennzeichnet, daß** das Fördergehäuse (12) einen Eingabebereich (13) aufweist, der sich in Förderrichtung des Erntegutes zur Fördertrommel hin verjüngt.

9. Erntemaschine nach Anspruch 8, **dadurch gekennzeichnet, daß** der Eingabebereich (13) parallel zur Längsachse der Fördertrommel vorgesehen ist.

10. Erntemaschine nach einem der Ansprüche 1 bis 9, **dadurch gekennzeichnet, daß** das Fördergehäuse (12) ein Gutabgabebereich (14) hat, der sich im wesentlichen parallel zur Längsachse der Fördertrommel in dem Fördergehäuse (12) erstreckt.

11. Erntemaschine nach einem der Ansprüche 1 bis 10, **dadurch gekennzeichnet, daß** an den Luftschächten (15, 16) Anschlüsse für die Verbindung mit Absaugleitungen vorgesehen sind.

## Claims

1. Harvester, in particular a self-propelled forage harvester (1) for picking up and chopping maize, wilted grass, green forage and similar crop for harvesting, having a chopping arrangement (7) which is positioned downstream of a pickup means for crop for harvesting in the direction of feed of the crop for harvesting, and having a feeder (9), which feeder (9) is provided between the chopping arrangement (7) and an arrangement (4) for discharging crop for harvesting, is arranged in a feeder housing (12), carries feeding members and can have a rotary movement imparted to it, **characterised in that** the feeder (9) takes the form of a feeding drum, having a continuous hollow body, which is arranged in a feeder housing (12) which surrounds the end-faces (11) of the feeding drum at a distance to form passages (15, 16) for air at the end-faces, **in that** individual feeding members (17, 18) are arranged in the passages (15, 16) for air at least in a region or regions, and **in that** paddles (17) are provided as feeding members on the circumference (10) of the feeding drum, individual paddles (17) projecting into the passages (15, 16) for air in a region or regions.

2. Harvester according to claim 1, **characterised in that** individual paddles (17) are arranged on the circumference (10) of the feeding drum to be staggered relative to one another.

3. Harvester according to claim 2, **characterised in that** paddles (17) are arranged in series on the circumference (10) of the feeding drum, with ends (17.1) of a series of paddles projecting into the passages (15, 16) for air.

4. Harvester according to one of claims 1 to 3, **characterised in that** air-propelling members (18) are arranged on the end-faces (11) of the feeding drum.

5. Harvester according to claim 4, **characterised in that** the air-propelling members (18) are formed to be narrower than the regions (17.1) of paddles (17) which project into the passages (15, 16) for air and are arranged within the inner circle which the paddles (17) describe in rotation.

6. Harvester according to claim 4 or 5, **characterised in that** the air-propelling members (18) take the form of air vanes.

7. Harvester according to one of claims 1 to 6, **characterised in that** the passages (15, 16) for air at the end-faces each have an air-inlet duct (19) on the housing associated with them.

8. Harvester according to one of claims 1 to 7, **characterised in that** the feeder housing (12) has an input region (13) which narrows towards the feeding drum in the direction of feed of the crop for harvesting.

9. Harvester according to claim 8, **characterised in that** the input region (13) is provided parallel to the longitudinal axis of the feeding drum.

10. Harvester according to one of claims 1 to 9, **characterised in that** the feeder housing (12) has an output region (14) for crop which extends in the feeder housing (12) substantially parallel to the longitudinal axis of the feeding drum.

11. Harvester according to one of claims 1 to 10, **characterised in that** connections are provided to the passages (15, 16) for air for connection to extractor pipes.

## Revendications

1. Moissonneuse, en particulier récolteuse-hacheuse autopropulsée (1) destinée à loger et hacher du maïs, de l'herbe préfanée et un produit de récolte similaire, comprenant un système de hachage (7) placé à la suite d'un logement de produit de récolte dans le sens d'avance du produit de récolte et comprenant un convoyeur (9) prévu entre le système de hachage (7) et un dispositif d'éjection du produit de récolte (4), disposé dans un boîtier de transport (12), portant des éléments de transport et pouvant se déplacer en rotation, **caractérisée en ce que** le convoyeur (9) est conçu comme un tambour de transport comprenant un corps creux fermé et disposé dans un boîtier de transport (12) délimitant les faces frontales (11) du tambour de transport avec un espacement en formant des puits d'aération (15, 16) côté face frontale, **en ce que** des éléments de transport (17, 18) individuels sont disposés au moins par zone dans les puits d'aération (15, 16), et **en ce que** des palettes (17) sont prévues comme éléments de transport sur l'enveloppe (10) du tambour de transport, les palettes (17) individuelles faisant saillie par zone à l'intérieur des puits d'aération (15, 16).

2. Moissonneuse selon la revendication 1, **caractérisée en ce que** des palettes (17) individuelles sont disposées en déport les unes par rapport aux autres sur l'enveloppe (10) du tambour de transport.

3. Moissonneuse selon la revendication 2, **caractérisée en ce que** les palettes (17) sont prévues en rang sur l'enveloppe (10) du tambour de transport, les extrémités (17.1) d'une rangée de palettes faisant saillie à l'intérieur des puits d'aération (15, 16).

4. Moissonneuse selon l'une quelconque des revendications 1 à 3, **caractérisée en ce que** des éléments de transport d'air (18) sont disposés sur les surfaces frontales (11) du tambour de transport.

5. Moissonneuse selon la revendication 4, **caractérisée en ce que** les éléments de transport d'air (18) sont plus étroits que les zones (17.1) des palettes (17) faisant saillie dans les puits d'aération (15, 16) et sont disposés dans le cercle de rotation des palettes (17).

6. Moissonneuse selon la revendication 4 ou 5, **caractérisée en ce que** les éléments de transport d'air (18) sont conçus comme des aubes d'air.

7. Moissonneuse selon l'une quelconque des revendications 1 à 6, **caractérisée en ce que** respectivement un canal d'admission d'air (19) côté boîtier est associé aux puits d'air (15, 16) côté frontal.

8. Moissonneuse selon l'une quelconque des revendications 1 à 7, **caractérisée en ce que** le boîtier de transport (12) comprend une zone d'introduction (13) rétrécissant dans le sens de marche du produit de récolte en direction du tambour de transport.

9. Moissonneuse selon la revendication 8, **caractérisée en ce que** la zone d'introduction (13) est prévue parallèlement à l'axe longitudinal du tambour de transport.

10. Moissonneuse selon l'une quelconque des revendications 1 à 9, **caractérisée en ce que** le boîtier de transport (12) présente une zone de distribution de produit (14) s'étendant sensiblement parallèlement à l'axe longitudinal du tambour de transport dans le boîtier de transport (12).

11. Moissonneuse selon l'une quelconque des revendications 1 à 10, **caractérisée en ce que** des raccordements pour la liaison aux conduites d'aspiration sont prévus sur les puits d'aération (15, 16).
